# EUROPÄISCHE PATENTSCHRIFT

(11) **EP 3 161 352 B1**
(45) Veröffentlichungstag und Bekanntmachung des Hinweises auf die Patenterteilung: **26.09.2018**
(21) Anmeldenummer: 15730432.0
(22) Anmeldetag: 09.06.2015
(51) Int. Cl.: F16H 57/031

(54) **GETRIEBE**
TRANSMISSION
TRANSMISSION

(30) Priorität: 27.06.2014 DE 102014009316
(43) Veröffentlichungstag der Anmeldung: 03.05.2017
(73) Patentinhaber: Sew-Eurodrive GmbH & Co. KG, 76646 Bruchsal (DE)
(72) Erfinder: KERSCHBAUM, Martin, 76139 Karlsruhe (DE); MORITZ, Thorsten, 76698 Ubstadt-Weiher (DE)
(86) Internationale Anmeldenummer: PCT/EP2015/062751
(87) Internationale Veröffentlichungsnummer: WO 2015/197351

(56) Entgegenhaltungen:
- WO-A1-01/71220
- DE-A1-102005 021 865
- DE-A1-102008 044 959
- DE-A1-102012 007 626

## Beschreibung

Die Erfindung betrifft ein Getriebe.

Es ist allgemein bekannt, dass ein Getriebe ein Gehäuseteil aufweist, in welchem ein Lager einer Welle aufgenommen ist, mit welchem zumindest ein Verzahnungsteil drehfest verbunden ist.

Aus der DE10 2008 044 959A1 ist als nächstliegender Stand der Technik ein Kompaktantrieb bekannt.

Aus der DE10 2005 021 865A1 ist ein Gehäuse für ein stufenloses Automatgetriebe bekannt.

Aus der WO01/71220A1 ist ein Getriebebaukasten bekannt.

Aus der DE10 2012 007 626A1 ist ein Getriebe mit einer ersten Welle und einer zweiten Welle bekannt.

Der Erfindung liegt daher die Aufgabe zugrunde, die Herstellung eines Getriebes in möglichst einfacher Weise ausführbar zu machen.

Erfindungsgemäß wird die Aufgabe bei dem Getriebe nach den in Anspruch 1 angegebenen Merkmalen gelöst.

Wichtige Merkmale der Erfindung bei dem Getriebe sind, dass es mit Gehäuseteil und Lager vorgesehen ist,
wobei am Gehäuseteil eine Lageraufnahme ausgeführt ist, in welcher das Lager aufgenommen ist,
wobei eine Verschlusskappe mit dem Gehäuseteil verbunden ist und das Lager abdeckt, insbesondere zur Umgebung hin,
wobei das Gehäuseteil eine durch die Wandung des Gehäuseteils durchgehende Ausnehmung aufweist, welche ebenfalls von der Verschlusskappe abgedeckt ist.

Von Vorteil ist dabei, dass zur Abdichtung und Abdeckung nur die Verschlusskappe notwendig ist. Somit sind weitere Teile einsparbar. Allerdings ist die Verschlusskappe somit nicht mittig zum Lager vorsehbar, wenn eine möglichst einfache Herstellung beibehalten werden soll.

Bei einer vorteilhaften Ausgestaltung ist die durch die Wandung des Gehäuseteils durchgehende Ausnehmung beabstandet von der Lageraufnahme,
insbesondere so dass zwischen der durch die Wandung des Gehäuseteils durchgehenden Ausnehmung und der Lageraufnahme Material der Wandung des Gehäuseteils angeordnet ist. Von Vorteil ist dabei, dass das Lager stabil im Gehäuseteil aufgenommen ist und trotzdem die Ölzufuhrausnehmung abdeckbar ist durch die Verschlusskappe.

Bei einer vorteilhaften Ausgestaltung ist die Lageraufnahme ebenfalls als eine durch die Wandung des Gehäuseteils durchgehende Ausnehmung ausgeführt. Von Vorteil ist dabei, dass eine einfache Herstellung ausführbar ist.

Bei einer vorteilhaften Ausgestaltung ist die Verschlusskappe in einer Ausnehmung des Gehäuseteils aufgenommen,
wobei die Ausnehmung als innenzylindrische Ausnehmung, insbesondere Kreisbohrung, ausgeführt ist. Von Vorteil ist dabei, dass eine einfache Herstellung ausführbar ist.

Bei einer vorteilhaften Ausgestaltung weist die Verschlusskappe einen kreisförmigen Umfang auf, insbesondere einen kreiszylindrischen Abschnitt aufweist. Von Vorteil ist dabei, dass eine einfache Herstellung ausführbar ist.

Bei einer vorteilhaften Ausgestaltung ist das Lager und/oder die Lageraufnahme außermittig zur Verschlusskappe angeordnet. Von Vorteil ist dabei, dass zur Abdeckung beider Ausnehmungen nur ein einzigen Teil, also die Verschlusskappe, notwendig ist.

Bei einer vorteilhaften Ausgestaltung ist die durch die Wandung des Gehäuseteils durchgehende Ausnehmung außermittig zur Verschlusskappe angeordnet. Von Vorteil ist dabei, dass mittels der Verschlusskappe beide Ausnehmungen, also auch die Lageraufnahme abdeckbar sind.

Erfindungsgemäß ist die durch die Wandung des Gehäuseteils durchgehende Ausnehmung schlitzartig ausgeformt, welche in Umfangsrichtung, insbesondere zur Drehachse des Lagers, weiter ausgedehnt ist als in radialer Richtung. Von Vorteil ist dabei, dass eine einfache Herstellung ermöglicht ist und im Falle des schlitzartigen Ausformens dieses schon im Gussteil ausführbar ist, so dass weitere Bearbeitungen entfallen.

Bei einer vorteilhaften Ausgestaltung umgibt das Gehäuseteil zumindest das Lager, eine Welle und ein Verzahnungsteil des Getriebes gehäusebildend. Von Vorteil ist dabei, dass das Getriebe ölgeschmierte Verzahnungsteile aufweist.

Erfindungsgemäß ist die Verschlusskappe aus außengummiertem Stahlblech ausgeführt, wobei die Gummierung zumindest die Verschlusskappe zum Gehäuseteil hin abdichtet. Von Vorteil ist dabei, dass der Innenraum des Getriebes mit Öl befüllbar ist und somit die im Eingriff stehenden Verzahnungen und die Lager schmierbar sind mit dem Öl.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

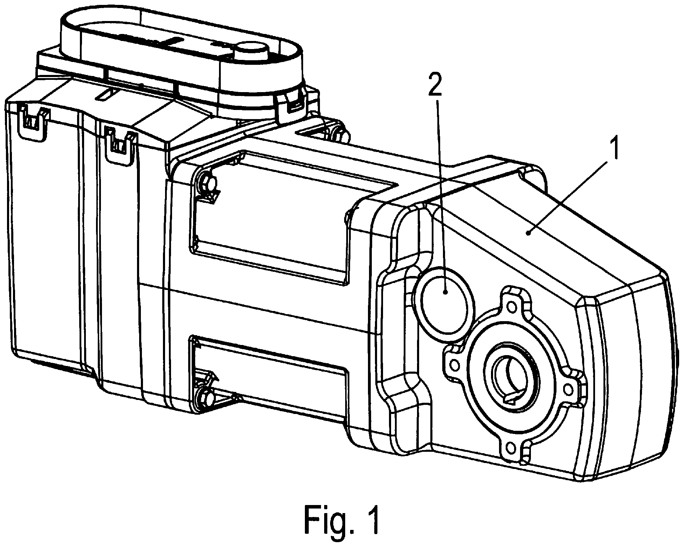

In der Figur 1 ist ein erfindungsgemäßes Getriebe mit Gehäuseteil 1 in Schrägansicht gezeigt.

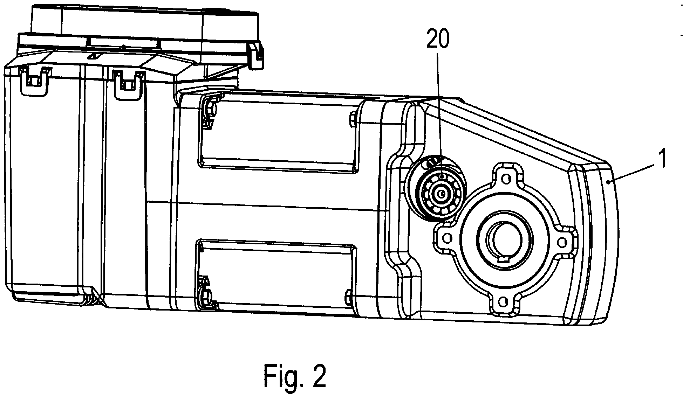

In der Figur 2 ist das Getriebe aus anderem Blickwinkel gezeigt.
In der Figur 3 ist ein vergrößerter Ausschnitt aus Figur 2 gezeigt.

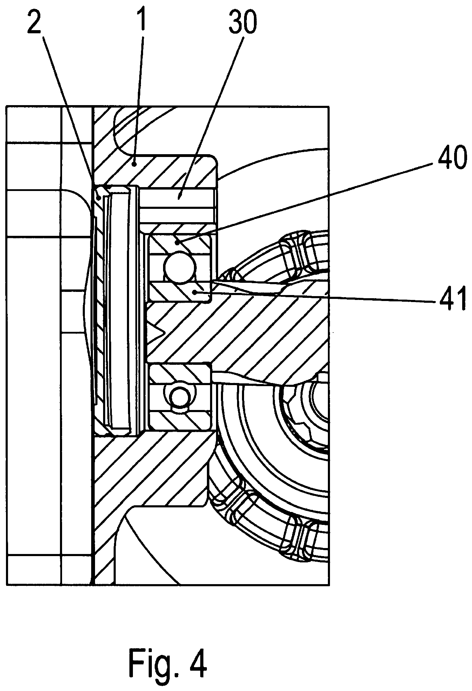

In der Figur 4 ist ein Querschnitt durch einen Ausschnitt des Getriebes gezeigt.

Wie in den Figuren gezeigt, weist das Getriebe ein Gehäuseteil 1 auf, in welchem ein Lager 20 im Gehäuseteil 1 aufgenommen ist. Im Lager ist eine Welle des Getriebes gelagert, insbesondere eine eintreibende, abtreibende Welle oder eine Zwischenwelle. Mit einer jeweiligen Welle des Getriebes ist ein Verzahnungsteil 31 drehfest verbunden.

Zur Aufnahme des Lagers weist die Wandung des Gehäuseteil 1 eine durchgehende Ausnehmung auf. Der Außenring 40 des Lagers 20 ist dabei in die Lageraufnahme eingepresst und berührt somit das Gehäuseteil 1. Der Innenring 41 des Lagers ist mit der Welle verbunden.

Die Lageraufnahme ist zur Umgebung hin von einer Verschlusskappe 2 abgedeckt. Diese Verschlusskappe 2 ist dicht mit der Lageraufnahme verbunden.

Eine weitere durchgehende Ausnehmung 31 ist ebenfalls von der Verschlusskappe 2 abgedeckt und beabstandet von der Lageraufnahme, insbesondere mittels eines Abschnitts der Wandung.

Die Lageraufnahme ist im Wesentlichen zylindrisch, um das Lager 20, welches ebenfalls einen zylindrischen Bauraum beansprucht, aufzunehmen. Vorzugsweise ist das Lager 20 ein Wälzlager, wie Kugellager oder dergleichen.

Die Verschlusskappe 2 ist in einer ebenfalls zylindrischen Aufnahme, also Ausnehmung im Gehäuseteil 1, aufgenommen. Allerdings ist die Zylinderachse dieser Aufnahme der Verschlusskappe beabstandet von der Drehachse des Lagers 20.

Das Lager 20 ist also außermittig zur Verschlusskappe 2 angeordnet. Die Verschlusskappe 2 überdeckt das Lager 20 und die weitere durchgehende Ausnehmung 31. Somit ist einerseits das Lager 20 vor von der Umgebung her eindringendem Schmutz geschützt und andererseits aber auch nach Abnehmen der Verschlusskappe 2 Schmieröl des Getriebes einfüllbar durch die weitere Ausnehmung 31.

Vorzugswiese ist das Lager 20 von dem Schmieröl des Getriebes geschmiert, so dass keine Nachteile entstehen, wenn beim Einfüllen von Öl durch die weitere Ausnehmung 31 hindurch das Lager 20 ebenfalls von Öl benetzt wird.

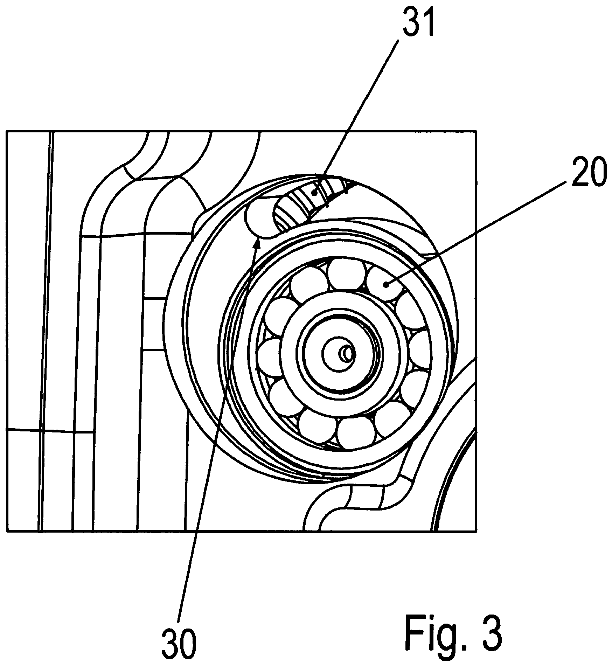

Die weitere Ausnehmung 31 ist in Figur 3 als schlitzartige Ausnehmung ausgeführt, insbesondere im als Gussteil ausgeführten Gehäuseteil 1 vorgegossen ausgeführt. Eine weitere Bearbeitung ist nicht notwendig.

Die Verschlusskappe 2 ist als vollgummierte Stahlkappe ausgeführt. Die Gummierung ermöglicht ein öldichtes Verbinden mit dem Gehäuseteil 1 in der Aufnahme der Verschlusskappe 2. Denn die Gummierung wird elastisch deformiert beim Einpressen der Verschlusskappe 2 in die Aufnahme der Verschlusskappe 2 im Gehäuseteil.

Bei einem weiteren erfindungsgemäßen Ausführungsbeispiel ist die weitere Ausnehmung 31 aber auch als Bohrung, insbesondere also als Ölfüllbohrung, ausführbar.

### Bezugszeichenliste

1 Gehäuseteil
2 Verschlusskappe
20 Lager
30 Ausnehmung, durchgehend
31 Verzahnungsteil
40 Außenring
41 Innenring

## Patentansprüche

1. Getriebe mit Gehäuseteil (1) und Lager (20),
wobei am Gehäuseteil (1) eine Lageraufnahme ausgeführt ist, in welcher das Lager (20) aufgenommen ist,
wobei eine Verschlusskappe (2) mit dem Gehäuseteil (1) verbunden ist und das Lager (20) zur Umgebung hin abdeckt,
wobei das Gehäuseteil (1) eine durch die Wandung des Gehäuseteils (1) durchgehende Ausnehmung (30) aufweist, welche ebenfalls von der Verschlusskappe (2) abgedeckt ist,
**dadurch gekennzeichnet, dass**
die durch die Wandung des Gehäuseteils (1) durchgehende Ausnehmung (30) schlitzartig ausgeformt ist, welche in Umfangsrichtung zur Drehachse des Lagers weiter ausgedehnt ist als in radialer Richtung,
und dass
die Verschlusskappe (2) aus außengummiertem Stahlblech ausgeführt ist, wobei die Gummierung zumindest die Verschlusskappe (2) zum Gehäuseteil (1) hin abdichtet.

2. Getriebe nach Anspruch 1,
**dadurch gekennzeichnet, dass**
die durch die Wandung des Gehäuseteils (1) durchgehende Ausnehmung (30) beabstandet ist von der Lageraufnahme,
so dass zwischen der durch die Wandung des Gehäuseteils (1) durchgehenden Ausnehmung (30) und der Lageraufnahme Material der Wandung des Gehäuseteils (1) angeordnet ist.

3. Getriebe nach mindestens einem der vorangegangenen Ansprüche,
**dadurch gekennzeichnet, dass**
die Lageraufnahme ebenfalls als eine durch die Wandung des Gehäuseteils (1) durchgehende Ausnehmung (30) ausgeführt ist.

4. Getriebe nach mindestens einem der vorangegangenen Ansprüche,
**dadurch gekennzeichnet, dass**
die Verschlusskappe (2) in einer Ausnehmung (30) des Gehäuseteils (1) aufgenommen ist, wobei die Ausnehmung (30) als innenzylindrische Ausnehmung (30),
ausgeführt ist.

5. Getriebe nach mindestens einem der vorangegangenen Ansprüche,
**dadurch gekennzeichnet, dass**
die Verschlusskappe (2) einen kreisförmigen Umfang aufweist.

6. Getriebe nach mindestens einem der vorangegangenen Ansprüche,
**dadurch gekennzeichnet, dass**
das Lager (20) und/oder die Lageraufnahme außermittig zur Verschlusskappe (2) angeordnet ist.

7. Getriebe nach mindestens einem der vorangegangenen Ansprüche,
**dadurch gekennzeichnet, dass**
die durch die Wandung des Gehäuseteils (1) durchgehende Ausnehmung (30) außermittig zur Verschlusskappe (2) angeordnet ist.

8. Getriebe nach mindestens einem der vorangegangenen Ansprüche,
**dadurch gekennzeichnet, dass**
das Gehäuseteil (1) zumindest das Lager (20), eine Welle und ein Verzahnungsteil (31) des Getriebes gehäusebildend umgibt.

9. Getriebe nach mindestens einem der vorangegangenen Ansprüche,
**dadurch gekennzeichnet, dass**
die durch die Wandung des Gehäuseteils (1) durchgehende Ausnehmung (30) und die Lageraufnahme in die Aufnahme der Verschlusskappe (2) münden.

## Claims

1. A gearbox with housing part (1) and bearing (20),
wherein a bearing receptacle is formed on the housing part (1), in which receptacle the bearing (20) is received,
wherein a closing cap (2) is connected to the housing part (1) and covers the bearing (20) towards the surroundings,
wherein the housing part (1) has a continuous cutout (30) which passes through the wall of the housing part (1), which cutout is likewise covered by the closing cap (2),
**characterised in that**
the cutout (30) which passes through the wall of the housing part (1) is formed in slot-like manner, which is extended further in the peripheral direction relative to the axis of rotation of the bearing than in the radial direction,
and **in that**
the closing cap (2) is formed from externally rubber-coated steel sheet, the rubber coating sealing off at least the closing cap (2) towards the housing part (1).

2. A gearbox according to Claim 1,
**characterised in that**
the cutout (30) which passes through the wall of the housing part (1) is spaced apart from the bearing receptacle,
so that material of the wall of the housing part (1) is arranged between the cutout (30) which passes through the wall of the housing part (1) and the bearing receptacle.

3. A gearbox according to at least one of the preceding claims,
**characterised in that**
the bearing receptacle is likewise formed as a cutout (30) which passes through the wall of the housing part (1).

4. A gearbox according to at least one of the preceding claims,
**characterised in that**
the closing cap (2) is received in a cutout (30) in the housing part (1),
wherein the cutout (30) is formed as an internally cylindrical cutout (30).

5. A gearbox according to at least one of the preceding claims,
**characterised in that**
the closing cap (2) has a circular periphery.

6. A gearbox according to at least one of the preceding claims,
**characterised in that**
the bearing (20) and/or the bearing receptacle is/are arranged eccentrically to the closing cap (2).

7. A gearbox according to at least one of the preceding claims,
**characterised in that**
the cutout (30) which passes through the wall of the housing part (1) is arranged eccentrically to the closing cap (2).

8. A gearbox according to at least one of the preceding claims,
**characterised in that**
the housing part (1) surrounds at least the bearing (20), a shaft and a toothed part (31) of the gearbox in housing-forming manner.

9. A gearbox according to at least one of the preceding claims,
**characterised in that**
the cutout (30) which passes through the wall of the housing part (1) and the bearing receptacle open into the receptacle of the closing cap (2).

## Revendications

1. Réducteur comportant une partie boîtier (1) et un palier (20),
dans lequel un logement de palier est réalisé sur la partie boîtier (1), dans lequel le palier (20) est logé,
dans lequel un capuchon de fermeture (2) est relié à la partie boîtier (1) et recouvre le palier (20) vers l'environnement,
dans lequel la partie boîtier (1) présente un évidement (30) traversant la paroi de la partie boîtier (1), lequel est également recouvert par le capuchon de fermeture (2), **caractérisé en ce que**
l'évidement (30) traversant la paroi de la partie boîtier (1) est réalisé sous la forme d'une fente qui est plus étendue dans la direction circonférentielle par rapport à l'axe de rotation du palier que dans la direction radiale,
**et que**
le capuchon de fermeture (2) est réalisé en tôle d'acier caoutchoutée extérieurement, le revêtement en caoutchouc rendant au moins le capuchon de fermeture (2) étanche vers la partie boîtier (1).

2. Réducteur selon la revendication 1,
**caractérisé en ce que**
l'évidement (30) traversant la paroi de la partie boîtier (1) est espacé du logement de palier,
de sorte que du matériau de la paroi de la partie boîtier (1) est disposé entre l'évidement (30) traversant la paroi de la partie boîtier (1) et le logement de palier.

3. Réducteur selon au moins l'une des revendications précédentes,
**caractérisé en ce que**
le logement de palier est également réalisé sous la forme d'un évidement (30) traversant la paroi de la partie boîtier (1).

4. Réducteur selon au moins l'une des revendications précédentes,
**caractérisé en ce que**
le capuchon de fermeture (2) est reçu dans un évidement (30) de la partie boîtier (1), l'évidement (30) étant réalisé sous la forme d'un évidement cylindrique intérieur (30).

5. Réducteur selon au moins l'une des revendications précédentes,
**caractérisé en ce que**
le capuchon de fermeture (2) présente une circonférence circulaire.

6. Réducteur selon au moins l'une des revendications précédentes,
**caractérisé en ce que**
le palier (20) et/ou le logement de palier sont disposés excentriquement par rapport au capuchon de fermeture (2).

7. Réducteur selon au moins l'une des revendications précédentes,
**caractérisé en ce que**
l'évidement (30) traversant la paroi de la partie boîtier (1) est disposé excentriquement par rapport au capuchon de fermeture (2).

8. Réducteur selon au moins l'une des revendications précédentes,
**caractérisé en ce que**
la partie boîtier (1) entoure au moins le palier (20), un arbre et une partie dentée (31) du réducteur de manière à former un boîtier.

9. Réducteur selon au moins l'une des revendications précédentes,
**caractérisé en ce que**
l'évidement (30) traversant la paroi de la partie boîtier (1) et le logement de palier débouchent dans le logement du capuchon de fermeture (2).
